# EUROPEAN PATENT SPECIFICATION

(11) **EP 2 193 091 B1**
(45) Date of publication and mention of the grant of the patent: **18.07.2012**
(21) Application number: 08807093.3
(22) Date of filing: 12.09.2008
(51) Int. Cl.: B65G 59/10, A21C 9/08, B65B 43/46

(54) **APPARATUS FOR UNPILING CONTAINERS, PARTICULARLY PASTRY CONTAINERS**
VORRICHTUNG ZUR ENTSTAPELUNG VON BEHÄLTERN, VOR ALLEM KUCHENBEHÄLTER
APPAREIL PERMETTANT DE DÉSEMPILER DES EMBALLAGES, EN PARTICULIER DES EMBALLAGES DE PÂTISSERIES

(30) Priority: 14.09.2007 IT MI20071767
(43) Date of publication of application: 09.06.2010
(73) Proprietor: C.M.S. Costruzione Macchine Speciali S.r.l., 20122 Milano (IT)
(72) Inventor: BAROSIO, Emanuele, I-25010 Pozzolengo (Brescia) (IT)
(74) Representative: Ponzellini, Gianmarco
(86) International application number: PCT/IB2008/002413
(87) International publication number: WO 2009/034467

(56) References cited:
- WO-A-96/00632
- US-A- 5 456 570

## Description

The present invention relates to an apparatus for unpiling containers, and in particular containers for food products such as pastry products, according to the preamble of claim 1.

It is known that in the food sector and above all in the confectionery industry, containers known in the art as "bun cases" are used which are made either of smooth or undulated paper or of paper board, and into which a doughy substance to be baked is poured.

These containers are supplied in packets in which the containers are piled up tightly in contact with each other. There is therefore a requirement not only for automatic feeding and transfer of the bun cases to the operating regions where they are used, but above all for automatic separation of each bun case from the other cases piled up to form a predetermined packet.

The apparatuses designed for unpiling individual bun cases from the respective piled up packets are referred to as "bun case unpiling apparatuses", and an example of a presently known apparatus of this type is described in the European Patent EP 506 629. This bun case unpiling apparatus operates on piles of this items where the latter are placed on top of a horizontal supporting surface and are disposed on guides along a chute and such oriented that their concavity substantially faces upwards. The apparatus comprises a movable port letting a predetermined number of bun cases fall in a regulated manner onto the underlying supporting surface, while the remaining bun cases are retained on sloping guides by a pin element. The bun cases dropped on the supporting surface, still in a piled condition, are still arranged with their concavity facing upwards, and are picked up by an extractor body having an end the shape of which matches that of the bun cases. The end of the extractor body mates the top bun case and is suitable for reaching a steady matching condition with it due to the pneumatic vacuum action exerted by holes formed in said end, while the other underlying bun cases are retained on the supporting surface by an auxiliary pneumatic vacuum action. The extractor body supporting a single bun case can therefore move in a horizontal and a vertical direction by means of a belt or chain actuating system to lay the bun case in a laying station. During transfer of the individual bun case by the extractor body, the bun case is always maintained with its concavity facing upwards, and at the time of release the vacuum action is replaced by a jet of air under pressure imposing separation of the bun case from the end of the extractor body.

Document US-A-5456570, discloses an apparatus for unpilling containers according to the preamble of claim 1. Disadvantageously, said unpiling apparatus is very complicated due to the presence of the belt or chain actuating means in which many transmission shafts are required and tortuous paths are imposed to the belt or chain; in addition it appears to be bulky due to the presence of the extractor body and the necessary spaces for transfer of the bun cases between the supporting surface and the bun case laying station.

Furthermore, an unpiling apparatus as above described allows laying of a bun case at a time, and for the purpose of increasing the apparatus productivity, availability of several apparatuses is required, i.e. as many identical apparatuses are to be arranged in side by side relationship as the number of the bun cases to be simultaneously laid, which will make construction still more complicated and will involve an increase in the overall bulkiness, as a result of the presence of a plurality of extractor bodies, supporting surfaces, actuating belts/chains, and so on.

It is a technical task of the present invention to make available an apparatus for unpiling containers, in particular pastry containers, that is devoid of the above mentioned drawbacks.

Within the scope of this technical task, it is an aim of the invention to make available an apparatus for unpiling containers, in particular pastry containers, enabling a high productivity while at the same time having a reduced overall bulkiness.

Another aim of the invention is to make available an actuating system allowing the whole apparatus to be actuated in a quick and simple manner, with constant co-ordination and reliability.

A still further aim of the invention is to provide an apparatus for unpiling containers, in particular pastry containers, that is of simple and practical construction.

The foregoing and still further aims that will become more apparent in the following of the present specification, are substantially achieved by an apparatus for unpiling containers, in particular pastry containers, having the features set out in claim 1 and/or respectively, in one or more of the claims depending thereon.

A preferred but not exclusive embodiment of an apparatus for unpiling containers, in particular pastry containers, in accordance with the present invention, is now illustrated by way of non-limiting example, with reference to the accompanying drawings, in which:
- Fig. 1 shows a plant for confectionery production in which an apparatus for unpiling containers in accordance with the present invention, is used;
- Fig. 2 is a perspective view of part of an apparatus for unpiling containers in accordance with the present invention;
- Figs. 3a-3e show a side view of the portion seen in Fig. 2 according to an operating sequence;
- Fig. 4 is a section view of the portion seen in Figs. 3a to 3e along the directrix IV-IV in Fig. 3e, with some parts removed in order to make others more prominent;
- Fig. 5 is a section view of the portion shown in Fig. 4 along the directrix V-V in Fig. 4, with some parts removed in order to make others more prominent.

An unpiling apparatus according to the present invention is generally denoted by reference numeral 1 in the attached drawings. Preferably, although not exclusively, the unpiling apparatus 1 can be used in plants for producing food products and in particular sweets such as biscuits, muffins, plum-cakes and the like.

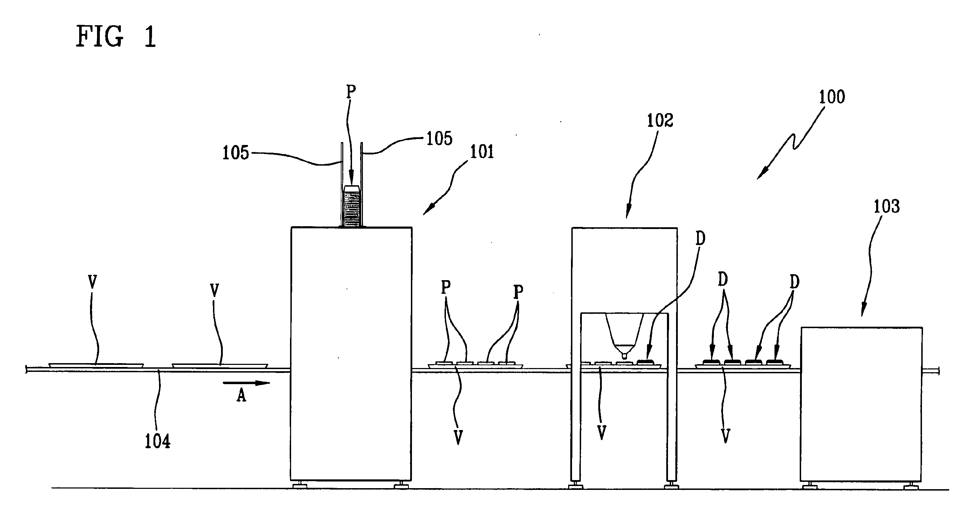

Fig. 1 shows a plant for the confectionery industry, identified with reference numeral 100 and only given by way of example, which is used for preparation of said sweets. In particular, plant 100 comprises an unpiling station 101, a filling station 102 and a baking station or oven 103, disposed in the above order. The plant comprises a conveyor 104, of the belt or roller type, which crosses said stations 101, 102, 103 and determines a connecting vector between them. The unpiling station 101 comprises an unpiling apparatus 1 according to the present invention, which will be described in detail in the following.

The plant is adapted to move a plurality of trays "V" in a rhythmic sequence, between an entrance station not shown and positioned upstream of the unpiling station 101 and an exit station placed downstream of the baking station 103 and not shown too. Conveyor 104 moves trays "V" between said stations 101, 102, 103 in an advancing direction denoted by reference "A" in Fig. 1 in the direction stated by the corresponding arrow.

The unpiling station 101 is adapted to receive a pile of containers "P" at the entry, which are disposed on top of each other and supported by preferably vertical guides 105, and to dispose them in an orderly manner on said trays "V" or more generally on a laying surface, according to a matrix arrangement, for example. Containers "P", as shown in Fig. 1 and in the other figures, preferably consist of bun cases and are of the type designed to hold and partly surround a respective confectionery product "D" before, during and after baking. However this does not constitute a limitation for use of apparatus 1 in accordance with the present invention which can also be employed for unpiling other different types of containers.

The filling station 102 carries out pouring of a predetermined amount of confectionery product "D" in a semifluid or doughy state, while in the baking station 103 the confectionery product "D" is cooked by heating. Downstream of the baking station 103 other stations not shown can be provided, a station for stuffing the confectionery product "D" or stations for garnishing its surface, for example.

At all events it is to be noted that the bun case unpiling apparatus can be suitably used in fully different production lines and can be in different relationship with the other devices shown in Fig. 1 without departing from the inventive scope of the present invention.

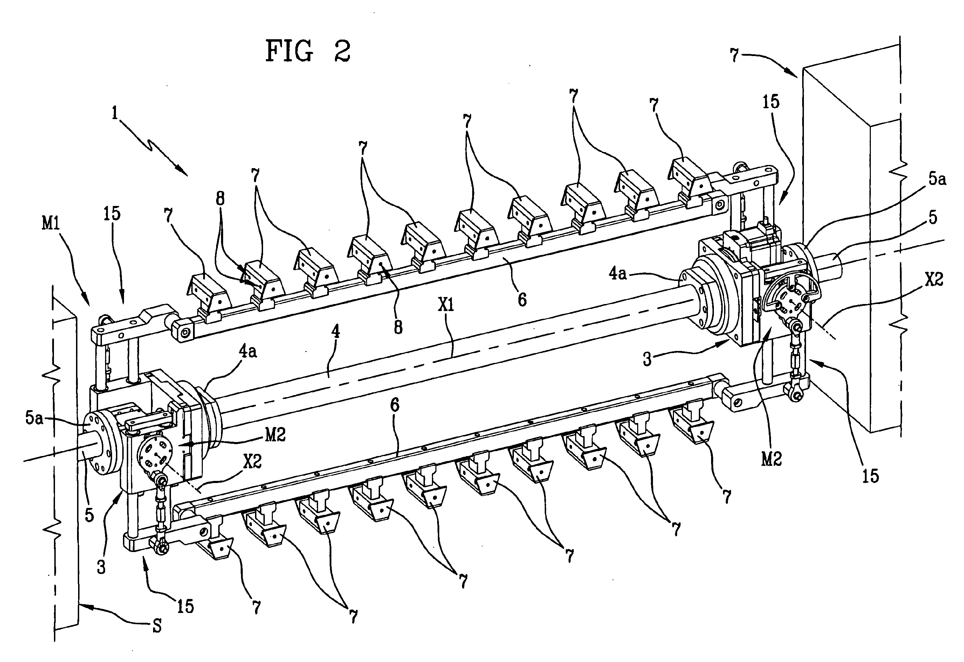

The unpiling apparatus 1 in accordance with the present invention and used in the above described unpiling station 101 is shown in detail in Fig. 2 and in the following figures.

The unpiling apparatus 1 comprises a carousel mechanism generally denoted at 2 in Fig. 2, which is adapted to rotate about a first axis "X1" which is preferably fixed and more preferably horizontal.

The carousel mechanism 2 is supported at its opposite ends, preferably by means of rolling bearings, by a bearing structure of apparatus 1 not shown, an outer casing of apparatus 1, for example.

In more detail, the carousel mechanism 2 comprises two drive boxes 3 rigidly connected to each other by a central rod 4 parallel to said first axis "X1", in such a manner that the two drive boxes 3 are integral with each other in rotation. The unpiling apparatus 1 further comprises driving means acting between the bearing structure of apparatus 1 and the carousel mechanism 2 to drive the carousel mechanism in rotation around said first axis "X1". At least one of the drive boxes 3, preferably both of them, is rigidly connected to an end shaft 5 that can be supported by one of said rolling bearings, or more generally by a support "S" and can be coupled to said driving means. In more detail, said driving means comprises an electric motor not shown or any other device adapted to transmit a rotary motion around the first axis "X1" to the drive boxes 3.

In accordance with the embodiment shown in the drawings, each drive box 3 has a pair of opposed flanged portions 3a, 3b that can be steadily coupled by means of threaded connections, on one side to an end flange 5a of a respective end shaft 5 and on the other side to an end flange 4a of the central rod 4.

The carousel mechanism 2 comprises a pair of supporting elements 6 parallelly aligned with said first axis "X1" and arranged opposite to the first axis "X1". Each supporting element 6 carries a plurality of gripping members 7 having an outer conformation matching the shape of the containers "P" to be unpiled, and in particular having a trapezium-shaped section in the embodiment herein shown.

It is however important to point out that the shape of the gripping members 7 may be quite different depending on the container to be picked up (round, square, rectangular, etc.). Each gripping member 7 has a plurality of openings 8 connected to pneumatic means not shown and adapted to generate a pneumatic vacuum action so that, by the vacuum exerted through the openings, the gripping member 7 can retain a respective container "P" on itself until said pneumatic action is stopped.

Preferably, the pneumatic means adapted to generate the vacuum is mounted on the carousel mechanism 2 and therefore this means too rotates around the first axis "X1".

By rotation of the carousel mechanism 2 around said first axis "X1", said carousel mechanism 2 is able to pick up a container "P" from a picking-up station 9 disposed above the carousel mechanism 2 and then lay container "P" at a laying station 10 disposed under the carousel mechanism 2, on one of said trays "V", for example. The carousel mechanism 2 therefore defines first actuating means "M1" acting on the gripping members 7, through the supporting elements 6, for moving the gripping members 7 between the picking-up station 9 and the laying station 10.

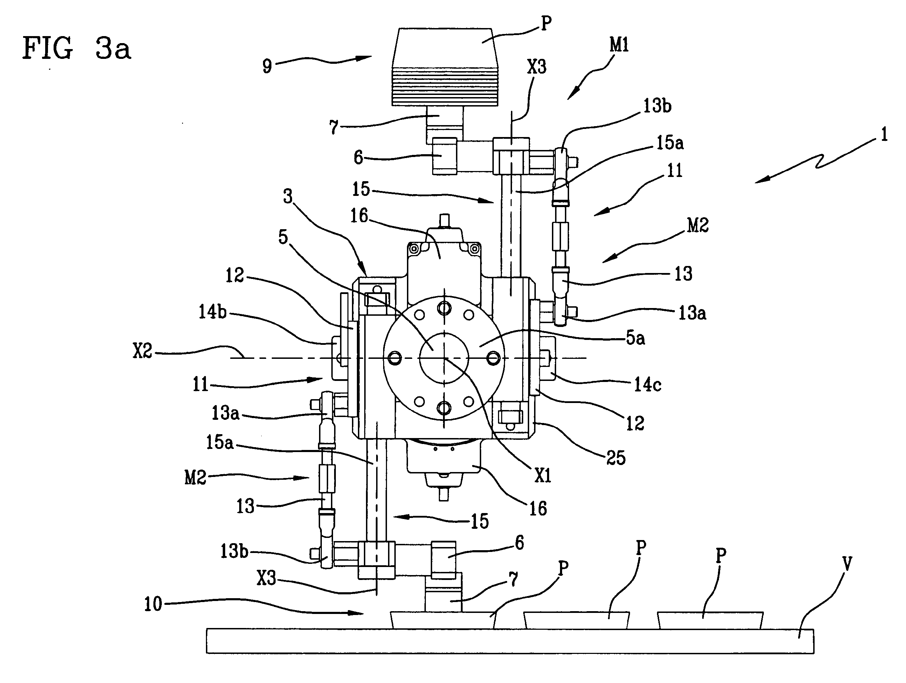

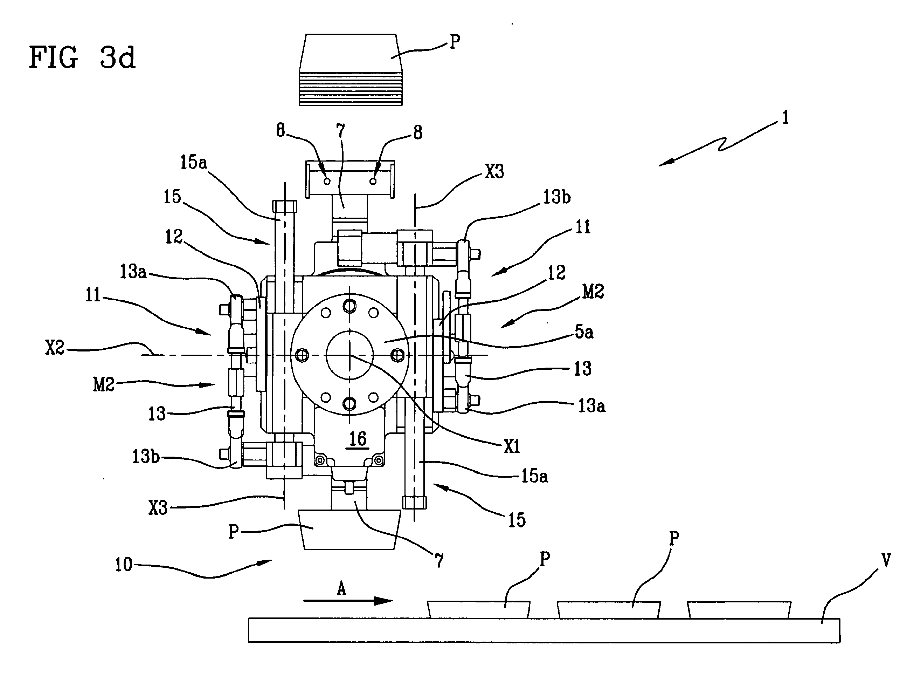

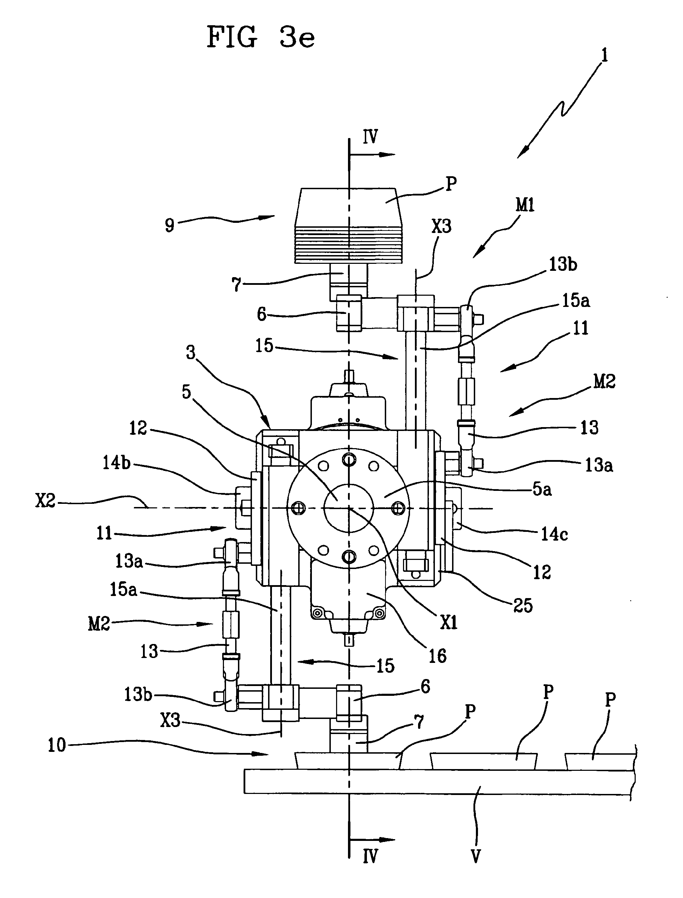

The position of the picking-up and laying stations 9, 10 is better visible in the operating sequence shown in Figs. 3a to 3e. In these figures it is possible to see that, since the carousel mechanism 2 must cover an angle of half a revolution to move from the picking-up station 9 to the laying station 10, containers "P" are arranged at the top in a piled position with their concavity facing downwards, so that when said containers "P" have been laid on tray "V" they are such oriented that their concavity faces upwards and therefore they are ready for receiving an amount of the semifluid or doughy product "D". In this case too it is to be pointed out that rotation between the two stations could be equal to an angle different from 180° if stations 9, 10 were disposed at different positions (at 90° from each other, for example).

Containers "P" piled up at the picking-up station 9 are supported by retaining means substantially known and therefore not shown, which allows picking up of the container "P" disposed in the lowermost position while steadily retaining the other overlying containers "P" between said guides 105. By way of example, the retaining means can be of the type equipped with an element as described in the European Patent EP 506 629 or also take advantage of frictional forces.

Each supporting element 6 has a major extension size parallel to said first axis "X1" around which the carousel mechanism 2 rotates. Advantageously, in addition, each supporting element 6 is movable close to and away from the first axis "X1", i.e. the central rod 4, to move the gripping members 7 close to and away from said first axis "X1". Advantageously, the supporting elements 6 move in the same plane passing through said first axis "X1". In this way no eccentricity exists between the gripping members 7 and the first axis "X1" during the approaching and moving apart motion of the gripping members 7 relative to the first axis "X1".

In accordance with the above, the unpiling apparatus 1 comprises second actuating means "M2" acting between the carousel mechanism 2 and the gripping members 7 to move the gripping members 7 close to and away from the first axis "X1". In detail, the second actuating means "M2" is mounted on the carousel mechanism 2, and in particular on the drive boxes 3 and acts between each drive box 3 and the supporting elements 6. More preferably, the second actuating means "M2" acts between each drive box 3 and corresponding ends of the supporting elements 6.

In more detail, the second actuating means "M2" comprises a pair of eccentric crank mechanisms 11 for each drive box 3. Each eccentric crank mechanism 11 comprises an eccentric crank 12 rotatable with respect to a second axis "X2" perpendicular to said first axis "X1", and a connecting rod 13 having a first end 13a eccentrically hinged on crank 12 and a second end 13b hinged on the supporting element 6, preferably at an end of said supporting element 6.

Said first "X1" and second "X2" axes identify a plane which is a rotary plane during operation of the unpiling apparatus 1. Each drive box 3 carries two eccentric crank mechanisms 11 of the above described type, which are disposed on opposite sides relative to the first axis "X1" and are arranged at the opposite sides of a square in which the two other sides are taken up by the above mentioned flanged portions 3a, 3b. Preferably, the eccentric crank mechanisms 11 associated with the same supporting element 6 have respective eccentric cranks 12 rotating in timed relationship with each other, i.e. adapted to take homologous positions at a given moment. In this way, the supporting element 6 moves close to and away from the first axis "X1" while being always parallel to said first axis "X1". More preferably, the eccentric crank mechanisms 11 associated with the same supporting element 6 have respective eccentric cranks 12 rotating about second axes "X2" parallel to each other.

Advantageously, each drive box 3 carries a pair of eccentric cranks 12 which are rotatable around the same second axis "X2".

Each eccentric crank mechanism 11, by the rotary motion of crank 12 and the translational motion of the connecting rod 13, allows a reciprocating motion of the respective supporting element 6 associated therewith, and therefore a reciprocating motion of the gripping members 7 carried by the supporting element 6. This reciprocating motion that takes place cyclically close to and away from the first axis "X1", appears like the movement of a piston driven by an ordinary centred crank mechanism. Consequently, each supporting element 6, and therefore each corresponding gripping member 7 is movable between a top dead centre, corresponding to a maximum distance from the first axis "X1", and a bottom dead centre, corresponding to a minimum distance from the first axis "X1".

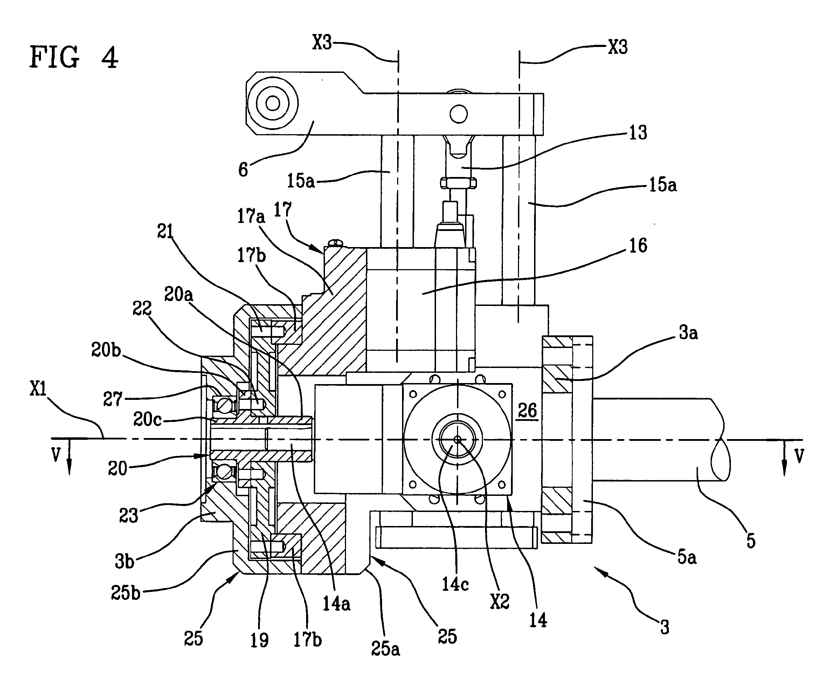

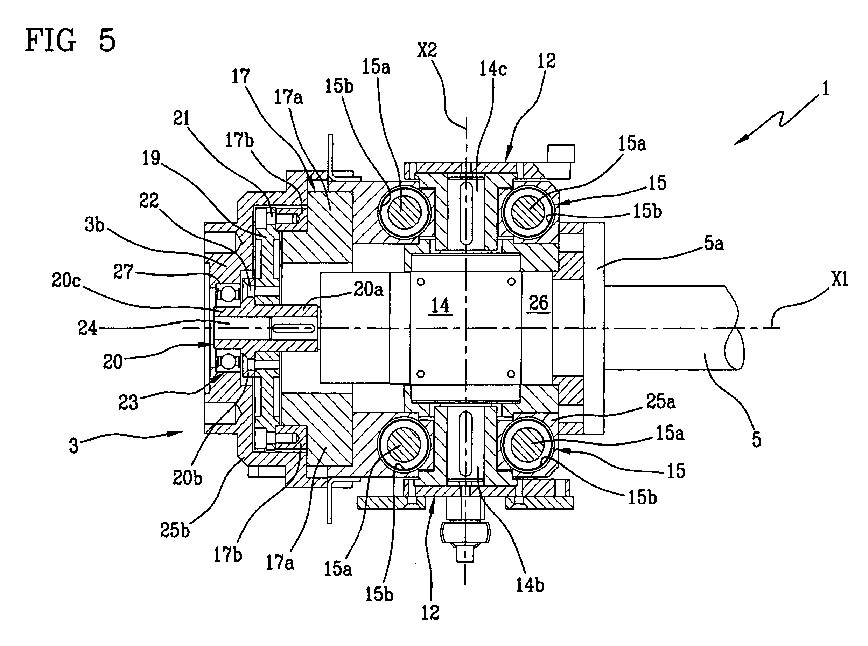

The second actuating means "M2" further comprises a pair of angular transmission elements 14, each of which is carried by a respective drive box 3 and preferably enclosed in said drive box 1. Each angular transmission element, as shown in Figs. 4 and 5, has an input shaft 14a and a pair of output shafts 14b, 14c. The input shaft 14a is placed in alignment with the first axis "X1" of apparatus 1 and rotates about said first axis "X1", while the output shafts 14b, 14c are in alignment with the same second axis "X2" and rotate about said second axis "X2". Each angular transmission element 14 is rigidly supported by the respective drive box 3, and the three shafts 14a, 14b, 14c of the angular transmission element 14 are mechanically connected with each other by means of bevel gears not shown as they are part of bevel transmission elements of a substantially known type. In accordance with a first embodiment, the output shafts 14b, 14c are part of a single shaft rotating about said second axis "X2" and coupled to the input shaft 14a by a taper fit so that the two output shafts 14b, 14c always rotate in the same direction relative to each other. In accordance with a second embodiment, the input shaft 14a is connected in a separated manner to the two output shafts 14b, 14c which therefore can only rotate in contrary directions relative to each other. Each output shaft 14b, 14c is steadily connected to a respective eccentric crank 12, preferably by a tongue connection, to rotate about the same second axis "X2". Therefore, the eccentric cranks 12 of each pair of eccentric crank mechanisms 11 acting on homologous ends of the supporting elements 6, i.e. on ends facing the same drive box 3, are rotatable about the same second axis "X2".

In addition, the second actuating means "M2" comprises at least one linear guide 15 associated with each eccentric crank mechanism 11. Each linear guide 15 extends along a third axis "X3" defining a Cartesian triad with said first "X1" and second "X2" axes. In other words, each third axis "X3" is oriented in a direction perpendicular to the rotating plane defined by the first axis "X1" and by the second axis "X2" and it too is therefore rotatable relative to the first axis "X1". The linear guides 15 comprise a piston 15a slidable in a respective groove 15b formed in each drive box 3. Piston 15a is therefore movable, by the action of a respective eccentric crank mechanism 11, along said third axis "X3" to move close to and/or lower the respective supporting element 6 relative to the first axis "X1". In accordance with the preferred embodiment of the invention herein illustrated, the second actuating means "M2" for each eccentric crank mechanism 11 comprises two linear guides 15 parallel to each other and to said third axis "X3".

Figs. 4 and 5 show one of the two drive boxes 3 in detail. In particular, each drive box 3 comprises a single electric motor 16 being part of said second actuating means "M2", adapted to move the gripping members 7 close to and away from the first axis "X1". The electric motor 16 is coupled to a rotating actuator 17 receiving the movement from the electric motor 16 and converting it into a rotation movement about an axis different from the rotation axis of the electric motor 16. In particular, the rotating actuator comprises a fixed table 17a rigidly connected to the electric motor 16 and a rotary table 17b of annular shape, driven in rotation by the electric motor 16 relative to the fixed table 17a. The rotating actuator 17 is disposed on the drive box 3 in such a manner that the rotary table 17b is rotatable about an axis coincident with said first axis "X1". The technical features of the rotating actuator 17, of the so-called "rotary-table" type, will not be discussed in detail as they are substantially of known type among the rotary-table actuators.

The electric motor 16 and rotating actuator 17 are advantageously connected to the angular transmission element 14 of the same drive box 3, and to this aim each drive box 3 comprises proper transmission means 18 suitable for movement transmission from the electric motor 16 to the angular transmission element 14, in particular to the input shaft 14a of the latter. The transmission means 18 comprises a disc 19 and a sleeve 20. Disc 19 is steadily connected to the rotary table 17b and it too is rotatable about the first axis "X1", in particular being driven in rotation by the rotary table 17b about said first axis "X1". At a central portion thereof, disc 19 has a through hole into which sleeve 20 is inserted. Sleeve 20 is steadily connected to disc 19 and is driven in rotation by disc 19 about said first axis "X1". Sleeve 20 has a first portion 20a inserted in said through hole of disc 19 and a second portion 20b having a greater diameter than the first portion 20a so as to define an abutment against disc 10.

Preferably, first screw threading connections 21 are provided to steadily connect disc 19 to the rotary table 17b and second screw threading connections 22 to connect the second portion 20b of sleeve 20 to disc 19. In this manner, sleeve 20 appears to be driven in rotation by disc 19 and therefore by the electric motor 16.

Sleeve 20 further has a third portion 20c located opposite to the first portion 20b relative to the second portion 20a, which means that the second portion 20b of sleeve 20 is placed between the first 20a and third 20c portions of sleeve 20. Said third portion 20c is coupled to a bearing 23 and supported thereby during rotation about the first axis "X1". The first portion 20a of sleeve 20, preferably the whole sleeve 20, has an inner seat 24 concentric with the first axis "X1" and inside which the input shaft 14a of the angular transmission element 14 can be inserted, by a grooved or tongue coupling. In this way, the electric motor 16 can drive the input shaft 14a of the angular transmission element 14 in rotation through the rotary table 17b, disc 19 and sleeve 20. During rotation of the electric motor 16, the rotary table 17b, disc 19, sleeve 20 and input shaft 14a of the angular transmission element 14 rotate at the same angular speed.

Altogether, disc 19, sleeve 20 and angular transmission element 14, all present on each drive box 3, define a first kinematic mechanism adapted to convert the rotary motion of motor 16 developing around an axis parallel to the first axis "X1" into a rotary motion of the output shafts 14b, 14c of the angular transmission element 14 around the second axis "X2". The eccentric crank mechanisms 11, on the other hand, define second kinematic mechanisms adapted to convert the rotary motion of said output shafts 14b, 14c around the second axis "X2" into a rectilinear motion of the gripping members 7 along said third axes "X3".

The drive box 3 further comprises an outer casing 25 adapted to define, in co-operation with the electric motor 16 and the rotating actuator 17, an inner space 26 inside which the angular transmission element 14 is housed.

The outer casing 25 comprises a first portion 25a placed on one side of the fixed table 17a of the rotating actuator 17 and a second portion 25b placed on the opposite side of said fixed table 17a. The first portion 25a of the outer casing 25 faces the end shaft 5 and has suitable openings to enable the second shafts 14b, 14c of the angular transmission element 14 to come out from the outer casing 25.

The first portion 25a of the outer casing 25 further has one of said flanged portions 3a, 3b for connection to the end shaft 5. The second portion 25b of the outer casing 25 on the contrary extends away from the fixed table 17a of the rotating actuator 17 and supports the other flanged portion 3a, 3b which is connected to the end flange 4a of the central rod 4, not shown in Figs. 4 and 5 for the sake of clarity. The second portion 25b of the outer casing 25 further has a housing 27 concentric with said first axis "X1" and designed to hold the outer ring of said bearing 23.

The outer casing 25 is further provided with said grooves 15b of the linear guides 15 inside which the respective pistons 15 run.

Operation of the above described unpiling apparatus is now illustrated with the aid of the operating sequence shown in Figs. 3a to 3e.

The starting position in Fig. 3a shows that the lower gripping members 7 are at the laying station 10 and have just laid the respective containers "P" on tray "V", whereas the upper gripping members 7 are at the picking-up station 9 and are coupled to the lower container "P" of each container pile to be unpiled. In this position, in the lower gripping members 7 the pneumatic vacuum action is stopped so that containers "P" laid on the tray can be released by said lower gripping members 7; on the contrary, the upper gripping members 7 are submitted to such a pneumatic action that they can retain the respective containers "P". In the position in Fig. 3a, in addition, all gripping members 7 are at their top dead centre, i.e. in the farthest position from the first axis "X1" allowed by the eccentric crank mechanisms 11.

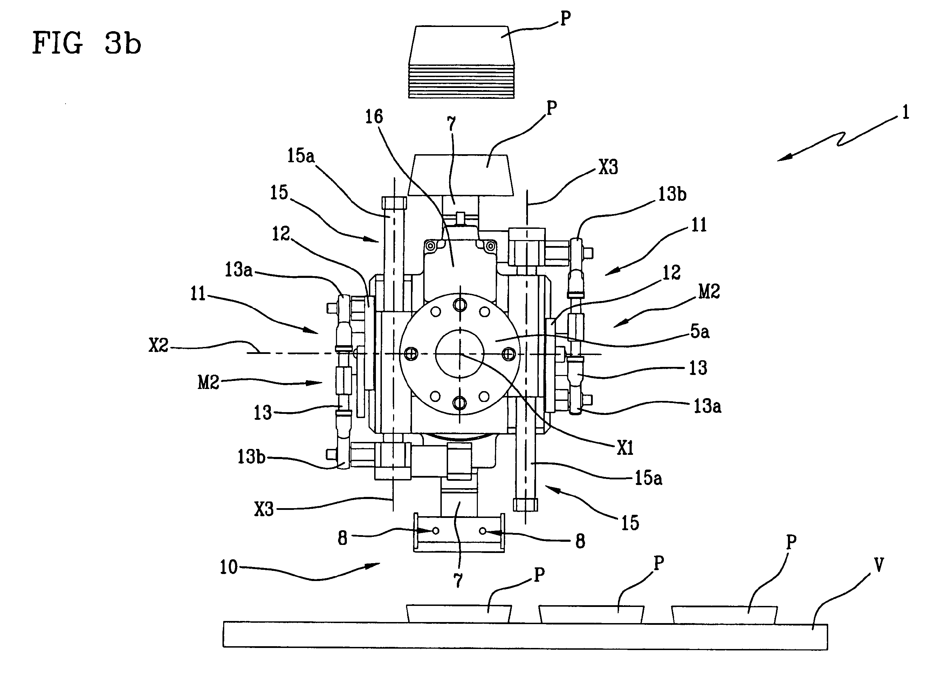

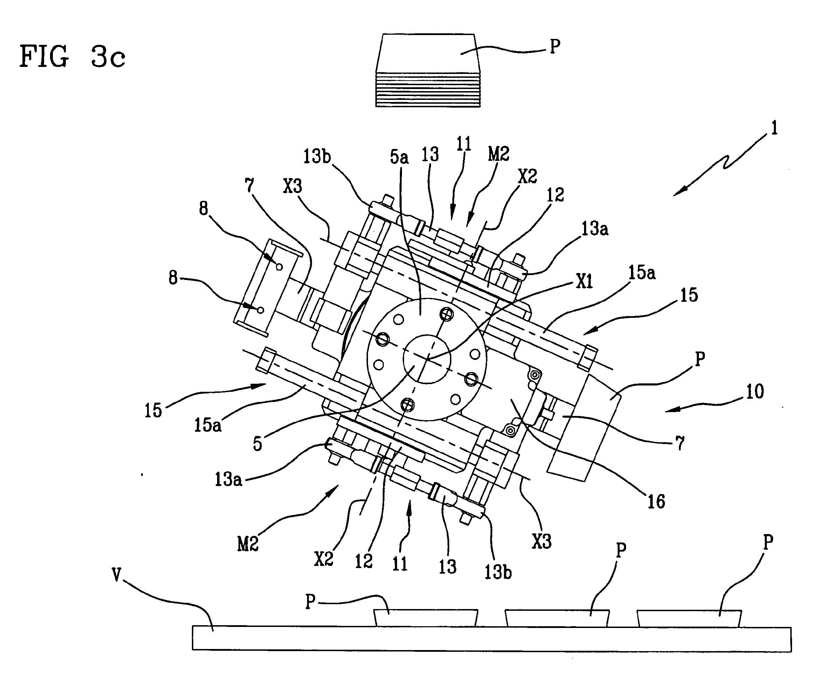

In the subsequent step, shown in Fig. 3b, the second actuating means "M2" is activated to bring the gripping members 7 to their bottom dead centre, i.e. to the closest position to the first axis "X1" allowed by the eccentric crank mechanisms 11. Consequently, the gripping members 7 have moved away from the lower containers "P" already laid and from the upper containers "P" to be unpiled. It is therefore possible to impart a rotation to the carousel mechanism 2 to reverse the positions between the upper and lower gripping members 7. In other words, by the first actuating means "M1" a rotation equal to half a revolution is imparted to the carousel mechanism 2, which rotation corresponds to the necessary angle for bringing the gripping members 7 that are at the picking-up station 9, to the laying station 10. The configuration taken by the unpiling apparatus 1 during rotation of the carousel mechanism 2 is shown in Fig. 3c.

Fig. 3b shows the final position reached by the carousel mechanism 2 when rotation has been completed, in which position the location of the gripping members 7 is overturned relative to the location before rotation of the carousel mechanism 2. Under this situation, the gripping members 7 are still at their bottom dead centre.

At this point, the second actuating means "M2" is activated again in order to bring the gripping members 7 back to their top dead centre, so that the lower gripping members 7 can lay down the previously picked-up containers "P" while the upper gripping members 7 can pick up new containers "P" from the piles to be unpiled, thereby reaching the starting position. Therefore a whole operating cycle of the unpiling apparatus 1 has been completed.

Rotation of the carousel mechanism 2 about the first axis "X1" can always take place either in the same direction or in one direction during a first cycle and in the opposite direction during the subsequent cycle.

In accordance with another embodiment as advantageous as the preceding one but not shown, a single supporting element 6 and therefore a single row of gripping members 7 can be provided. In this case, an operating cycle would require a sequence of steps involving picking up, laying and picking up, instead of involving the picking-up and laying steps carried out simultaneously by the two different rows of supporting members as previously described.

In accordance with a still further embodiment which is advantageous as well and not shown, it is also possible to provide a single eccentric crank mechanism 11 for each supporting element 6. This eccentric crank mechanism 11 would act on one end of the respective supporting element 6, while only the linear guides 15 would be present at the other end of the supporting element 6 or, alternatively, the last-mentioned end would be devoid both of the eccentric crank mechanism 11 and of the linear guides 15.

The present invention achieves the intended purposes overcoming the drawbacks present in the known art.

Use of a rotating carousel mechanism allows picking up of a plurality of containers or bun cases to be carried out simultaneously with a single apparatus.

In addition, due to the possibility of mounting two opposite rows of gripping members, productivity is doubled since on the one hand the containers can be loaded on the gripping members and simultaneously on the other hand the previously unpiled containers can be laid down. In fact, when a set of gripping members carried by one supporting element is at the picking-up station, another set of gripping members carried by the other supporting member is at the laying station, in such a manner that the two different sets of gripping members operate simultaneously, each on a respective station.

Use of eccentric crank mechanisms, with the motor directly mounted on the carousel mechanism offers a high construction simplicity and also the possibility of adjusting the position of the gripping members relative to the rotation axis of the carousel mechanism, irrespective of the position taken by the carousel mechanism.

The possibility of moving the gripping members close to and away from the first axis, and therefore also close to and away from the picking-up and laying stations, enables the containers to be picked up and laid down in a correct manner while rotation of the carousel mechanism can take place without dangerous interferences occurring between the gripping members and said picking-up and laying stations.

## Claims

1. An apparatus for unpiling containers, particularly food containers, comprising:
- a bearing structure;
- a plurality of gripping members (7) associable with at least one pile of containers (P) disposed on top of each other, said gripping members (7) being movable between a picking-up station (9), at which each of said gripping members (7) steadily grasps a container (P) being part of said pile, and a laying station (10) at which each gripping member (7) lays said container (P) on a rest surface;
- first actuating means (M1) acting between the bearing structure and the gripping members (7) to move the gripping members (7) from the picking-up station (9) to the laying station (10) and vice versa;
wherein said first actuating means (M1) comprises a carousel mechanism (2) rotatable about a first axis (X1) to transfer each gripping member (7) between the picking-up station (9) and the laying station (10) by rotation of said carousel mechanism (2) around said first axis (X1);
- second actuating means (M2) carried by said carousel mechanism (2) and acting between the carousel mechanism (2) and said gripping members (7) to move each gripping member (7) away from and close to said first axis (X1); **characterized in that** it further comprises
- at least one supporting element (6) to which a plurality of gripping members (7) are fastened, which members are aligned along said first axis (X1), said second actuating means (M2) acting between the carousel mechanism (2) and the supporting element (6) to move the supporting element (6) close to and away from said first axis (X1).

2. An apparatus as claimed in claim 1, **characterised in that** said second actuating means (M2) comprises at least one eccentric crank mechanism (11) adapted to move each gripping member (7) between an upper dead centre, corresponding to a maximum distance of the gripping member (7) from said first axis (X1), and a lower dead centre corresponding to a minimum distance of the gripping member (7) from said first axis (X1).

3. An apparatus as claimed in claim 2, **characterised in that** said eccentric crank mechanism (11) comprises an eccentric crank (X2) perpendicular to said first axis (X1), and a connecting rod (13) having a first end (13a) eccentrically hinged on said crank (12) and a second end (13b) associated with the gripping member (7).

4. An apparatus as claimed in claim 2 or 3, **characterised in that** each gripping member (7) seats at its upper dead centre when it reaches the picking-up station (9) and the laying station (10), and seats at its lower dead centre during transfer between said picking-up (9) and laying (10) stations.

5. An apparatus as claimed in claim 2, **characterised in that** said second actuating means (M2) comprises at least two eccentric crank mechanisms (11), each of them being associated with a respective gripping member (7), in particular said second actuating means (M2) further comprises an electric motor (16) acting on each eccentric crank mechanism (11) for determining a movement of the gripping members (7) from said upper to said lower dead centres and vice versa.

6. An apparatus as claimed in claims 3 and 5, **characterised in that** said electric motor (16) acts on at least two eccentric crank mechanisms (11), the eccentric cranks (12) of the eccentric crank mechanisms (11) connected to the same electric motor (16) being rotatable about the same second axis (X2).

7. An apparatus as claimed in one or more of claims 2 to 6, **characterised in that** it comprises at least one angular transmission element (14) carried by said carousel mechanism (2) and associated with a pair of eccentric crank mechanisms (11), said angular transmission element (14) having an input shaft (14a) adapted to receive a driving action from a respective electric motor (16), and a pair of output shafts (14b, 14c) aligned along the same axis (X2) and receiving a driving action from said input shaft (14a), preferably through bevel gears, each of said output shafts (14b, 14c) being connected to the eccentric crank (12) of one of said eccentric crank mechanisms (11) to drive said crank (12) in rotation about said second axis (X2).

8. An apparatus as claimed in claim 7, **characterised in that** said electric motor (16) determines a relative rotation of said input shaft (14a) relative to the carousel mechanism (2), preferably said input shaft (14a) being rotatable concentrically of said first axis (X1).

9. An apparatus as claimed in claim 1, **characterised in that** it comprises two supporting elements (6) disposed on the carousel mechanism (2) in such a manner that when one of said supporting elements (6) faces the picking-up station (9) the other supporting element (6) faces the laying station (10), preferably said supporting elements (6) being disposed at diametrically opposite positions relative to said first axis (X1).

10. An apparatus as claimed in claims 5 and 9, **characterised in that** each eccentric crank mechanism (11) is associated with a different supporting element (6) and acts on one end of the respective supporting element (6).

11. An apparatus as claimed in claim 9 or 10, **characterised in that** said second actuating means (M2) comprises two eccentric crank mechanisms (11) for each supporting element (6), which act on opposite ends of the supporting element (6).

12. An apparatus as claimed in claim 3, **characterised in that** the eccentric crank (12) of each eccentric crank mechanism (11) acting on a supporting element (6) is in timed relationship with the eccentric crank (12) of the other eccentric crank mechanism (11) acting on the same supporting element (11), preferably the eccentric cranks (12) of the eccentric crank mechanisms (11) associated with the same supporting element (6) rotating about respective second axes (X2) parallel to each other.

13. An apparatus as claimed in claims 7 and 9, **characterised in that** it comprises two angular transmission elements (14), each of them being associated with a pair of eccentric crank mechanisms (11) acting on respective supporting elements (6), each angular transmission element (14) having an input shaft (14a) adapted to receive a driving action from a respective electric motor (16), and a pair of output shafts (14b, 14c) aligned on the same second axis (X2) and receiving a driving action from said input shaft (14a), preferably through bevel gears, each of said output shafts (14b, 14c) being connected to the eccentric crank (12) of one of said eccentric crank mechanisms (11) to drive said crank (12) in rotation about said second axis (X2).

14. An apparatus as claimed in one or more of the preceding claims, **characterised in that** said gripping members (7) are disposed on the carousel mechanism (2) in such a manner that when a first set of gripping members (7) is positioned at the picking-up station (9), a second set of gripping members (7) is positioned at the laying station (10), in particular said first and second sets of gripping members (7) being carried by two different supporting elements (6), preferably said first and second sets being disposed at diametrically opposite positions relative to said first axis (X1).

## Patentansprüche

1. Vorrichtung zum Abtragen von Behältern, insbesondere von Lebensmittelbehältern, umfassend:
- ein Tragwerk;
- eine Mehrzahl von Haltegliedern (7), verbindbar mit mindestens einem Stapel von Behältern (P), die aufeinander angeordnet sind, wobei die Halteglieder (7) zwischen einer Aufnahmestation (9), an der jedes der Halteglieder (7) einen Behälter (P) zuverlässig greift, der Teil des Stapels ist, und einer Ablagestation (10), an der jedes Halteglied (7) den Behälter (P) auf einer Abstelloberfläche ablegt, bewegbar ist;
- ein erstes Betätigungsmittel (M1), das zwischen dem Tragwerk und den Haltegliedern (7) wirkt, um die Halteglieder (7) von der Aufnahmestation (9) zur Ablagestation (10), und umgekehrt, zu bewegen;
wobei das erste Betätigungsmittel (M1) einen Karussellmechanismus (2) umfasst, der um eine erste Achse (X1) drehbar ist, um jedes Halteglied (7) zwischen der Aufnahmestation (9) und der Ablagestation (10) durch Drehung des Karussellmechanismus (2) um die erste Achse (X1) zu transferieren;
- ein zweites Betätigungsmittel (M2), das vom Karussellmechanismus (2) getragen wird und das zwischen dem Karussellmechanismus (2) und den Haltegliedern (7) wirkt, um jedes Halteglied (7) von der ersten Achse (X1) weg und nahe an diese heran zu bewegen;
**dadurch gekennzeichnet, dass** sie weiter umfasst:
- mindestens ein unterstützendes Element (6), an das eine Mehrzahl von Haltegliedern (7) befestigt sind, welche Glieder entlang der ersten Achse (X1) ausgerichtet sind, wobei das zweite Betätigungsmittel (M2) zwischen dem Karussellmechanismus (2) und dem unterstützenden Element (6) wirkt, um das unterstützende Element (6) nahe an die erste Achse (X1) und von dieser weg zu bewegen.

2. Vorrichtung nach Anspruch 1, **dadurch gekennzeichnet, dass** das zweite Betätigungsmittel (M2) mindestens einen exzentrischen Kurbelmechanismus (11) umfasst, der angepasst ist, jedes Halteglied (7) zwischen einem oberen Totpunkt, der einer maximalen Entfernung des Haltegliedes (7) von der ersten Achse (X1) entspricht, und einem unteren Totpunkt, der einer minimalen Entfernung des Haltegliedes (7) von der ersten Achse (X1) entspricht, zu bewegen.

3. Vorrichtung nach Anspruch 2, **dadurch gekennzeichnet, dass** der exzentrische Kurbelmechanismus (11) eine exzentrische Kurbel (X2) umfasst, die rechtwinklig zur ersten Achse (X1) ist, und eine Verbindungsstange (13), die ein erstes Ende (13a), exzentrisch an der Kurbel (12) angelenkt, und ein zweites Ende (13b), verbunden mit dem Halteglied (7), aufweist.

4. Vorrichtung nach Anspruch 2 oder 3, **dadurch gekennzeichnet, dass** jedes Halteglied (7) an seinem oberen Totpunkt sitzt, wenn es die Aufnahmestation (9) und die Ablagestation (10) erreicht, und an seinem unteren Totpunkt sitzt, während des Transfers zwischen den Aufnahme- (9) und Ablagestationen (10).

5. Vorrichtung nach Anspruch 2, **dadurch gekennzeichnet, dass** das zweite Betätigungsmittel (M2) mindestens zwei exzentrische Kurbelmechanismen (11) umfasst, wobei jedes von diesen mit einem entsprechenden Halteglied (7) verbunden ist, insbesondere wobei das zweite Betätigungsmittel (M2) weiter einen Elektromotor (16) umfasst, der auf jeden exzentrischen Kurbelmechanismus (11) wirkt, um eine Bewegung der Halteglieder (7) von den oberen zu den unteren Totpunkten, und umgekehrt, zu bestimmen.

6. Vorrichtung nach Anspruch 3 und 5, **dadurch gekennzeichnet, dass** der Elektromotor (16) auf mindestens zwei exzentrische Kurbelmechanismen (11) wirkt, wobei die exzentrischen Kurbeln (12) der exzentrischen Kurbelmechanismen (11), die mit demselben Elektromotor (16) verbunden sind, um dieselbe zweite Achse (X2) drehbar sind.

7. Vorrichtung nach einem oder mehrerer der Ansprüche 2 bis 6, **dadurch gekennzeichnet, dass** sie mindestens ein Winkelübertragungselement (14) umfasst, dass vom Karussellmechanismus (2) getragen wird und mit einem Paar exzentrischer Kurbelmechanismen (11) verbunden ist, wobei das Winkelübertragungselement (14) eine Eingangswelle (14a) aufweist, die angepasst ist, einen Antrieb von einem entsprechenden Elektromotor (16) zu empfangen, und ein Paar Ausgangswellen (14b, 14c), die entlang derselben Achse (X2) ausgerichtet sind und einen Antrieb von der Eingangswelle (14a) empfangen, vorzugsweise durch Kegelräder, wobei jede der Ausgangswellen (14b, 14c) mit der exzentrischen Kurbel (12) eines der exzentrischen Kurbelmechanismen (11) verbunden ist, um die Kurbel (12) in Drehung um die zweite Achse (X2) anzutreiben.

8. Vorrichtung nach Anspruch 7, **dadurch gekennzeichnet, dass** der Elektromotor (16) eine Relativdrehung der Eingangswelle (14a) relativ zum Karussellmechanismus (2) bestimmt, wobei vorzugsweise die Eingangswelle (14a) zur ersten Achse (X1) konzentrisch drehbar ist.

9. Vorrichtung nach Anspruch 1, **dadurch gekennzeichnet, dass** sie zwei unterstützende Elemente (6) umfasst, die auf dem Karussellmechanismus (2) so angeordnet sind, dass wenn eines der unterstützenden Elemente (6) der Aufnahmestation (9) zugewandt ist, das andere unterstützende Element (6) der Ablagestation (10) zugewandt ist, wobei vorzugsweise die unterstützenden Elemente (6) an diametral gegenüberliegenden Positionen relativ zur ersten Achse (X1) angeordnet sind.

10. Vorrichtung nach Anspruch 5 und 9, **dadurch gekennzeichnet, dass** jeder exzentrische Kurbelmechanismus (11) mit einem anderen unterstützenden Element (6) verbunden ist, und auf ein Ende des entsprechenden unterstützenden Elements (6) wirkt.

11. Vorrichtung nach Anspruch 9 oder 10, **dadurch gekennzeichnet, dass** das zweite Betätigungsmittel (M2) zwei exzentrische Kurbelmechanismen (11) für jedes unterstützende Element (6) aufweist, die auf zwei gegenüberliegende Enden des unterstützenden Elements (6) wirken.

12. Vorrichtung nach Anspruch 3, **dadurch gekennzeichnet, dass** die exzentrische Kurbel (12) jedes exzentrischen Kurbelmechanismus (11), der auf ein unterstützendes Element (6) wirkt, in zeitlich abgestimmtem Verhältnis mit der exzentrischen Kurbel (12) des anderen exzentrischen Kurbelmechanismus (11) ist, der auf dasselbe unterstützende Element (11), wobei vorzugsweise die exzentrischen Kurbeln (12) der exzentrischen Kurbelmechanismen (11), die mit demselben unterstützenden Element (6) verbunden sind, sich parallel zueinander um die entsprechende zweite Achse (X2) drehen.

13. Vorrichtung nach Anspruch 7 und 9, **dadurch gekennzeichnet, dass** sie zwei Winkelübertragungselemente (14) umfasst, wobei jedes davon mit einem Paar exzentrischer Kurbelmechanismen (11) verbunden ist, die auf entsprechende unterstützende Elemente (6) wirken, wobei jedes Winkelübertragungselement (14) eine Eingangswelle (14a) aufweist, die angepasst ist, einen Antrieb von einem entsprechenden Elektromotor (16) zu empfangen, und ein Paar Ausgangswellen (14b, 14c), die entlang derselben Achse (X2) ausgerichtet sind und einen Antrieb von der Eingangswelle (14a) empfangen, vorzugsweise durch Kegelräder, wobei jede der Ausgangswellen (14b, 14c) mit der exzentrischen Kurbel (12) eines der exzentrischen Kurbelmechanismen (11) verbunden ist, um die Kurbel (12) in Drehung um die zweite Achse (X2) anzutreiben.

14. Vorrichtung nach einem oder mehreren der vorhergehenden Ansprüche, **dadurch gekennzeichnet, dass** die Halteglieder (7) auf dem Karussellmechanismus (2) so angeordnet sind, dass wenn ein erster Satz Halteglieder (7) an der Aufnahmestation (9) positioniert ist, ein zweiter Satz Halteglieder (7) an der Ablagestation (10) positioniert ist, wobei insbesondere die ersten und zweiten Sätze Halteglieder (7) von zwei unterschiedlichen unterstützenden Elementen (6) getragen werden, wobei vorzugsweise die ersten und zweiten Sätze an diametral gegenüberliegenden Positionen relativ zur ersten Achse (X1) angeordnet sind.

## Revendications

1. Appareil pour désempiler des conteneurs, en particulier des conteneurs d'aliments, comportant :
- une structure de support ;
- une pluralité d'éléments d'accrochage (7) associés à au moins une pile de conteneurs (P) disposés les uns au-dessus des autres, lesdits éléments d'accrochage (7) étant mobiles entre une station de ramassage (9), sur laquelle chaque élément d'accrochage (7) agrippe régulièrement un conteneur (P) faisant partie de ladite pile, et une station de dépose (10) dans laquelle chaque élément d'accrochage (7) dépose ledit conteneur (P) sur une surface de repos ;
- des premiers moyens d'actionnement (M1) agissant entre la structure de support et les éléments d'accrochage (7) pour actionner les éléments d'accrochage (7) de la station de ramassage (9) jusqu'à la station de dépose (10) et vice versa ; dans lequel lesdits premiers moyens d'actionnement (M1) comportent un mécanisme à carrousel tournant autour d'un premier axe (X1) pour transférer chaque élément d'accrochage (7) de la station de ramassage (9) à la station de dépose (10) par rotation dudit mécanisme à carrousel (2) autour dudit premier axe (X1) ;
- des seconds moyens d'actionnement (M2) portés par ledit mécanisme à carrousel (2) et agissant entre le mécanisme à carrousel (2) et lesdits éléments d'accrochage (7) pour éloigner et rapprocher chaque élément d'accrochage (7) dudit premier axe (X1) ;
**caractérisé en ce qu'**il comporte de plus
- au moins un élément de support (6) auquel une pluralité d'éléments d'accrochage (7) est fixée, lesdits éléments étant alignés le long dudit premier axe (X1), lesdits seconds éléments d'actionnement (M2) agissant entre le mécanisme à carrousel (2) et l'élément de support (6) pour rapprocher ou éloigner l'élément de support (6) dudit premier axe (X1).

2. Appareil selon la revendication 1 , **caractérisé en ce que** lesdits seconds moyens d'actionnement (M2) comportent au moins un mécanisme à manivelle excentrique (11) apte à actionner chaque élément d'accrochage (7) entre un point mort supérieur, correspondant à une distance maximale de l'élément d'accrochage (7) à partir dudit premier axe (X1), et un point mort inférieur correspondant à une distance minimale de l'élément d'accrochage (7) à partir dudit premier axe (X1).

3. Appareil selon la revendication 2, **caractérisé en ce que** ledit mécanisme à manivelle excentrique (11) comporte une manivelle excentrique (X2) perpendiculaire audit premier axe (X1), et une bielle (13) ayant une première extrémité (13a) articulée de façon excentrique sur ladite manivelle (12) et une seconde extrémité (13b) reliée à l'élément d'accrochage (7).

4. Appareil selon les revendications 2 ou 3, **caractérisé en ce que** chaque élément d'accrochage (7) siège à son point mort supérieur lorsqu'il atteint la station de ramassage (9) ou la station de dépose (10), et siège à son point mort inférieur lors du transfert entre lesdites stations de ramassage (9) et de dépose (10).

5. Appareil selon la revendication 2, **caractérisé en ce que** lesdits seconds moyens d'actionnement (M2) comportent au moins deux mécanismes à manivelle excentrique (11), chacun d'entre eux étant associé à son élément d'accrochage respectif (7), en particulier lesdits seconds moyens d'actionnement (M2) comportent en outre un moteur électrique (16) agissant sur chaque mécanisme à manivelle excentrique (11) afin de provoquer un déplacement des éléments d'accrochage (7) à partir dudit point mort supérieur vers ledit point mort inférieur et vice versa.

6. Appareil selon les revendications 3 et 5, **caractérisé en ce que** ledit moteur électrique (16) agit sur au moins deux mécanismes à manivelle excentrique (11), les manivelles excentriques (12) des mécanismes à manivelle excentrique (11) connectées au même moteur électrique (16) étant montées tournantes autour du même second axe (X2).

7. Appareil selon l'une quelconque des revendications 2 à 6, **caractérisé en ce qu'**il comprend au moins un élément de transmission angulaire (14) porté par ledit mécanisme à carrousel (2) et relié à une paire de mécanismes à manivelle excentrique (11), ledit élément de transmission angulaire (14) ayant un arbre d'entrée (14a) apte à être entraîné par un moteur électrique respectif (16), et une paire d'arbres de sortie (14b, 14c) disposés le long du même axe (X2) et qui reçoivent une action d'entraînement dudit arbre d'entrée (14a), de préférence par l'intermédiaire d'engrenages coniques, chacun des arbres de sortie (14b, 14c) étant connecté à la manivelle excentrique (12) de l'un des mécanismes à manivelle excentrique (11) afin de faire tourner ladite manivelle (12) autour dudit second axe (X2).

8. Appareil selon la revendication 7, **caractérisé en ce que** ledit moteur électrique (16) provoque une rotation relative dudit arbre d'entrée (14a) par rapport au mécanisme à carrousel (2), de préférence ledit arbre d'entrée (14a) tournant de manière concentrique audit premier axe (X1).

9. Appareil selon la revendication 1, **caractérisé en ce qu'**il comporte deux éléments de support (6) disposés sur le mécanisme à carrousel (2) de manière telle que, lorsque l'un des éléments de support (6) fait face à la station de ramassage (9), l'autre élément de support (6) fait face à la station de dépose (10), de préférence lesdits éléments de support (6) étant disposés de façon diamétralement opposées par rapport audit premier axe (X1).

10. Appareil selon les revendications 5 et 9, **caractérisé en ce que** chaque mécanisme à manivelle excentrique (11) est relié à un élément de support différent (6) et agit sur une extrémité de l'élément de support respectif (6).

11. Appareil selon les revendications 9 ou 10, **caractérisé en ce que** lesdits seconds moyens d'actionnement (M2) comportent deux mécanismes à manivelle excentrique (11) pour chaque élément de support (6), qui agissent sur des extrémités opposées de l'élément de support (6).

12. Appareil selon la revendication 3, **caractérisé en ce que** la manivelle excentrique (12) de chaque mécanisme à manivelle excentrique (11) agissant sur un élément de support (6) est synchronisée avec la manivelle excentrique (12) de l'autre mécanisme à manivelle excentrique (11) agissant sur le même élément de support (6), de préférence les manivelles excentriques (12) des mécanismes à manivelle excentrique (11) reliées au même élément de support (6) tournant autour de leurs seconds axes respectifs (X2) parallèles entre eux.

13. Appareil selon les revendications 7 et 9, **caractérisé en ce qu'**il comporte deux éléments de transmission angulaire (14), chacun d'entre eux étant relié à une paire de mécanismes à manivelle excentrique (11) agissant sur des éléments de support respectifs (6), chaque élément de transmission angulaire (14) ayant un arbre d'entrée (14a) apte à être entraîné par un moteur électrique (16), et une paire d'arbres de sortie (14b, 14c) alignés sur le même second axe (X2) et qui reçoivent une action d'entraînement dudit arbre d'entrée (14a), de préférence par l'intermédiaire d'engrenages coniques, chacun desdits arbres de sortie (12) de l'un des mécanismes à manivelle excentrique (14a, 14b) étant connecté à la manivelle excentrique (12) de l'un desdits mécanismes à manivelle excentrique (11) afin de commander ladite manivelle (12) en rotation autour dudit second axe (X2).

14. Appareil selon l'une quelconque des revendications précédentes, **caractérisé en ce que** lesdits éléments d'accrochage (7) sont disposés dans le mécanisme à carrousel (2) de manière telle que, lorsqu'un premier lot d'éléments d'accrochage (7) est positionné à la station de ramassage (9), un deuxième lot d'éléments d'accrochage (7) est positionné à la station de dépose (10), en particulier lesdits premier et deuxième lots d'éléments d'accrochage (7) sont portés par deux éléments de support différents (6), de préférence lesdits premier et deuxième lots étant disposés de manière diamétralement opposées par rapport audit premier axe (X1).
